# EUROPEAN PATENT SPECIFICATION

(11) **EP 4 567 406 B1**
(45) Date of publication and mention of the grant of the patent: **23.09.2026**
(21) Application number: 24212830.4
(22) Date of filing: 13.11.2024
(51) Int. Cl.: G01N 21/39, G01J 3/42, G01S 17/00, G01N 15/075, G01J 3/02, G01S 17/88, G01N 21/17

(54) **VEHICLE-BASED DUAL-COMB SPECTROMETER MEASUREMENTS**
FAHRZEUGBASIERTE DOPPELKAMMSPEKTROMETERMESSUNGEN
MESURES DE SPECTROMÈTRE À DOUBLE PEIGNE BASÉES SUR UN VÉHICULE

(30) Priority: 08.12.2023 US 202363607912 P; 13.12.2023 US 202363609777 P; 11.06.2024 US 202418740290
(43) Date of publication of application: 11.06.2025
(73) Proprietor: Honeywell International Inc., Charlotte, NC 28202 (US)
(72) Inventor: DOBBINS, Thomas, Charlotte, 28202 (US); HOYT, Chad, Charlotte, 28202 (US); CONRY, Patrick, Charlotte, 28202 (US); WIEBOLD, Matthew, Charlotte, 28202 (US)
(74) Representative: Haseltine Lake Kempner LLP

(56) References cited:
- US-A1- 2019 170 900
- US-A1- 2019 376 890
- US-A1- 2020 182 779
- US-A1- 2022 082 495

## Description

### CROSS-REFERENCE TO RELATED APPLICATIONS

The present application claims benefit of U.S. Patent Application Serial Nos. 63/607,912 filed December 8, 2023, and 63/609,777 filed on December 13, 2023.

### BACKGROUND

Changes in the Earth's climate profoundly impact the many interconnected systems operating on the Earth. Changes in ecosystems, precipitation patterns, and ocean levels can affect whether a species can survive on our shared planet. Understanding how the climate will change can help us prepare for, adapt to, or mitigate the effects of these changes. However, the climate is a complex and vast interconnected system that is difficult to model accurately. One challenge in modeling such a system is gathering sufficient data throughout the climate. With insufficient data, creating a useful climate model is challenging.

US2022082495A1 discloses apparatuses, systems, and methods for open path laser spectroscopy with mobile platforms. An example system may include a first mobile platform and a second mobile platform, each of which supports a payload. A light beam directed from one payload to another may define a measurement path, which may be at a particular height above the ground. The payloads may determine a gas concentration along the measurement path. Wind information at the measurement height may be used to determine a gas flux.

### SUMMARY

The present invention is defined by the independent claims, to which reference should now be made. Advantageous embodiments are set out in the dependent claims.

Systems and methods for vehicle-based dual-come spectrometer measurements are described herein. The system according to the present invention includes a vehicle having a body with at least one aperture formed therein and a vehicle surface. Also, the system includes a dual-comb spectrometer mounted to the body, wherein the dual-comb spectrometer is configured to emit dual-comb optical signals through the at least one aperture towards a external surface, wherein the external surface is surface not part of the vehicle surface, wherein the dual-comb spectrometer is configured to receive reflected optical signals through the at least one aperture, wherein the reflected optical signals correspond to the dual-comb optical signals that have been reflected by the external surface. Further, the system includes one or more processors configured to produce measurements of an average concentration of at least one particle within a volume between the vehicle and the external surface based on spectrographic information from the reflected optical signals.

### BRIEF DESCRIPTION OF DRAWINGS

Drawings accompany this description and depict only some embodiments associated with the scope of the appended claims. Thus, the described and depicted embodiments should not be considered limiting in scope. The accompanying drawings and specification describe the exemplary embodiments, and features thereof, with additional specificity and detail, in which:
FIG. 1 is a diagram illustrating multiple vehicles gathering environmental data using vehicle-based dual-comb spectrometers according to an aspect of the present disclosure;
FIG. 2 is a block diagram illustrating a system for acquiring environmental measurements from a vehicle-based dual-comb spectrometer according to an aspect of the present disclosure;
FIG. 3 is a diagram of a dual-comb spectrometer employed to gather environmental measurements according to an aspect of the present disclosure; and
FIG. 4 is a flowchart of a method for using vehicle-based dual-comb spectrometer measurements according to an aspect of the present disclosure.

Per common practice, the drawings do not show the various described features according to scale, but the drawings show the features to emphasize the relevance of the features to the example embodiments.

### DETAILED DESCRIPTION

The following detailed description refers to the accompanying drawings that form a part of the present specification. The drawings, through illustration, show specific illustrative embodiments. However, it is to be understood that other embodiments may be used, and that logical, mechanical, and electrical changes may be made.

Systems and methods for vehicle-based dual-comb spectrometer measurements are described herein. According to the present invention, a dual-comb spectrometer (DCS) is mounted to a vehicle. As the vehicle passes through an environment, the vehicle may emit optical signals to interrogate an environmental volume between the vehicle and an external, non-vehicle surface. As the optical signals pass through the volume, the optical signals will be absorbed, scattered, and reflected by different molecules and particulates in the volume. The optical signals are then reflected off the external surface to be received by the DCS on the vehicle, passing through and interrogating the volume again. Based on the composition of the volume, the optical signal received by the DCS will contain spectrographic information indicating the average composition of the interrogated volume.

As stated above, gathering environmental information is important for performing atmospheric analysis and climate predictions. For example, a vehicle, like an airplane, may have a DCS mounted to the body of the airplane. As the airplane passes through an environment, the DCS may emit an optical signal to interrogate the volume of the atmosphere between the airplane and the ground beneath the airplane. When the optical signal returns after reflecting off the ground, the optical signal can be detected and analyzed to identify spectrographic information for the interrogated volume. From the spectrographic information, systems on the aircraft or another system in communication with the aircraft may identify the average composition of the interrogated volume. For example, the spectrographic information may indicate the average amount of greenhouse gases (water vapor, methane, N₂O, CO₂, CO, O₃, and the like), particulate matter, or other measurements of environmental data. A central system can then use the measurements of environmental data acquired from the spectrographic information with measurements acquired by other interrogations by similar systems to acquire a more comprehensive understanding of the composition of the atmosphere. The acquired understanding can improve the ability to predict and mitigate undesired climate changes.

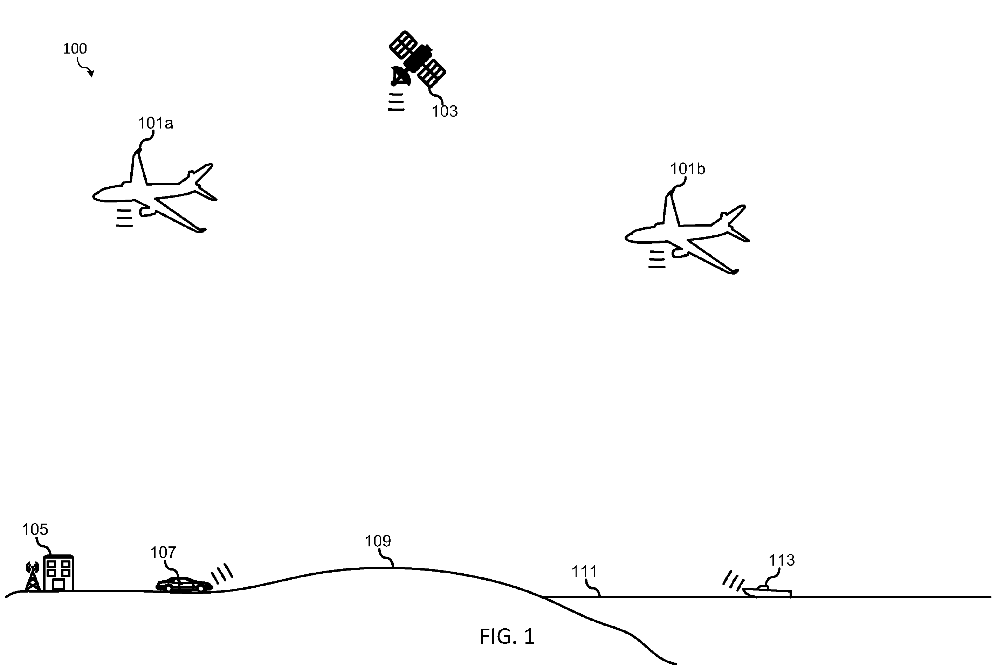

FIG. 1 is a diagram of an environment 100 through which multiple vehicles pass, gathering environmental data using vehicle-based dual-comb spectrometers. As illustrated, the environment 100 may contain multiple atmospheric volumes between a vehicle and an external surface. As described herein, an atmospheric volume is a volume comprising a portion of the atmosphere. Thus, an atmospheric volume includes gases and particulates suspended within the volume. As vehicles move, they pass through the environment 100. Examples of vehicles include aircraft 101 (airplanes, helicopters, missiles, drones, etc.), spacecraft 103 (rockets, satellites, etc.), land-based craft 107, watercraft 113, and the like.

In certain embodiments, the vehicles moving within the environment 100 have a DCS mounted thereon that emits an optical signal towards an external surface not part of the vehicle surface for measuring the average composition of the atmospheric volume between the vehicle and the surface. For example, a first aircraft 101a may emit an optical signal towards a external surface 109. The emitted optical signal then passes through the volume between the aircraft 101a and the external surface 109, where molecules and particles can reflect, absorb, and scatter the emitted optical signal. The emitted optical signal then reflects off the external surface 109 and passes through the volume again to be received by the DCS. The received optical signals can then be detected for processing, where subsequent processing can identify the composition of the volume between the aircraft 101a and the external surface 109 based on the spectrographic information of the received optical signals.

In further embodiments, when processing the detected optical signals reflected off the surface, the processing may consider information regarding the surface reflecting the emitted optical signals. For example, the external surface 109 is an example of a rocky terrain, and surface 111 is an example of water terrain. Accordingly, the vehicle may store information regarding the type of surface that reflects the emitted signal. For example, the aircraft 101b may store a terrain database that associates the current position of the vehicle with the surface immediately below the vehicle. Alternatively, the vehicle may include additional sensors, such as vision sensors, which allow computers on aircraft 101b to identify the type of surface reflecting the emitted optical signal.

According to the present invention, when a vehicle receives the reflected optical signals, a detector may receive the detected signal and generate an electrical signal containing spectrographic information for subsequent processing. The spectrographic information contains measurements of the amplitudes of the different wavelengths of light received in the reflected optical signal. In some implementations, computers on the vehicle may perform the subsequent processing to generate measurements of the average composition of the volume from the spectrographic information. Alternatively, communication systems on the vehicle may transmit the spectrographic information to other systems that perform the subsequent processing. However, some data links may not support data rates or have associated costs that make transmitting the spectrographic information infeasible. Further, the spectrographic information may be stored on a memory device, where it can be downloaded by another system either directly or through another communication system, where the other system performs the subsequent processing.

According to the present invention, the subsequent processing produces measurements of the average concentrations of certain molecules and particulates. For example, the measurements may identify the average concentrations of water vapor, methane, N₂O, CO₂, CO, O₃, and the like within the interrogated volume. In some implementations, the measurements may be provided to a control center 105 or some other center that uses the measurements for a desired purpose. For example, the control center 105 may accumulate measurements from multiple vehicles to gather information for the environment 100 to augment climate models and provide inputs to existing climate models. When providing information to the control center 105, a vehicle may transmit measurements immediately after calculation through a communication link. For example, the aircraft 101a may transmit information through a wireless communication link. The aircraft 101 may transmit the information directly to the control center 105 or through transmission relays. In at least one instance of relaying information to the control center 105, the aircraft 101b may transmit the information to a spacecraft 103 (such as a satellite), which transmits the information to the control center 105. Alternatively, the aircraft 101b may transmit the information to another aircraft, like aircraft 101a, which then relays the information to the control center 105.

In an alternative embodiment, the aircraft 101a may store the measurements until the aircraft 101a is proximate to the control center 105 or in a position where the measurements may be provided to the control center 105 using cheaper communication links, communication links controlled by an operator associated with the control center 105, or transferred to a portable computer readable medium that is physically delivered to the control center 105.

In additional embodiments, while the measurement of the composition of volumes has been described with respect to the aircraft 101a, other vehicles may also interrogate volumes within the environment. For example, vehicles may include spacecraft 103, land-based craft 107, watercraft 113, and the like. For instance, the land-based craft 107 and watercraft 113 may aim the emitted optical signals toward surfaces in the environment 100. For example, the land-based craft 107 may aim the emitted optical signals toward a mountain, a building, another vehicle, or other surface. Similarly, the watercraft 113 may also aim the emitted optical signals toward mountains, buildings, other vehicles, or other objects having surfaces. The spacecraft 103 may emit a signal from space towards a surface, similar to aircraft 101a and 101b.

Accordingly, as vehicles move through the environment 100, the different vehicles may interrogate volumes within the environment 100 using optical signals emitted and received by a DCS mounted on the respective vehicle. Measurements are produced and provided to a control center 105, where the control center 105 uses the measurements as inputs for climate prediction models or refining models.

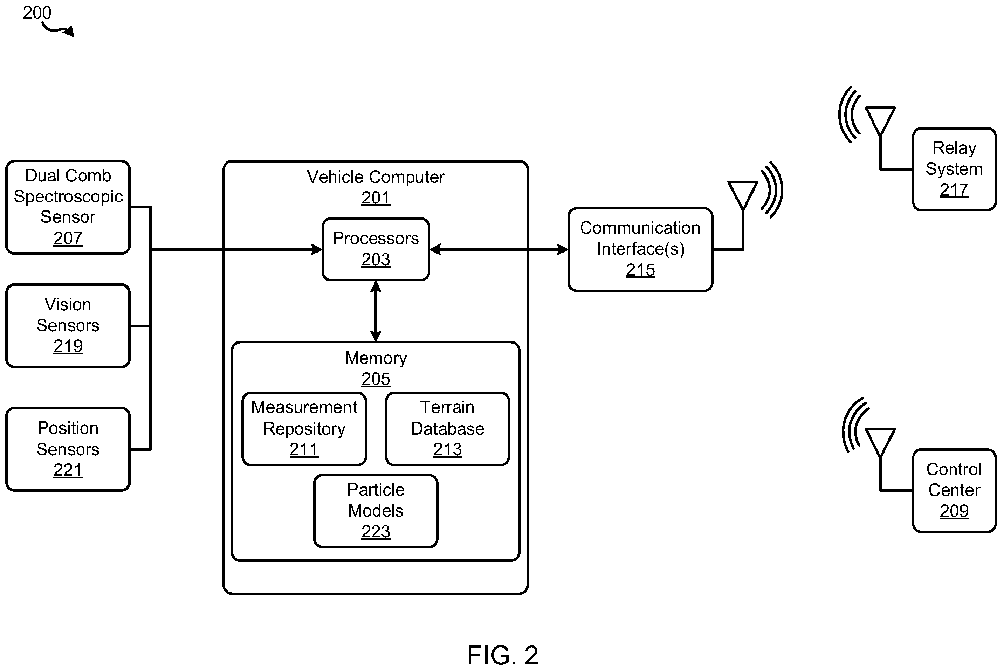

FIG. 2 is a block diagram of a system 200 for acquiring environmental measurements from a vehicle-based DCS. As illustrated, the system 200 includes a vehicle computer 201 and a DCS sensor 207. The vehicle computer 201 receives sensor data from the DCS sensor 207. The vehicle computer 201 may either calculate measurements of the average concentrations of different gases and particulates based on the sensor data, or the vehicle computer 201 may relay the received sensor data to a control center 209. The control center 209 may use the data as inputs for climate prediction models or refining models.

The vehicle computer 201 may include a processor(s) 203 and a memory 205. In certain embodiments, a processor 203 executes instructions that may direct the processor 203 to process the sensor data from the DCS sensor 207 to calculate the measurements of the average concentrations. Also, instructions may direct the processor 203 to transmit calculated measurements and/or sensor data to other systems or may save the measurements and/or sensor data in the memory 205. As described herein, the processor 203 may be a single processor or a device that includes combinations of general-purpose processors, multi-core processors, multiple processors, dedicated circuitry, and the like. The functions performed by the processor 203 may be implemented using software, firmware, hardware, or any appropriate combination thereof. The processors 203 and other computational devices may be supplemented by, or incorporated in, specially-designed application-specific integrated circuits (ASICs) or field programmable gate arrays (FPGAs). The processor 203 and other computational devices can also include or function with software programs, firmware, or other computer-readable instructions for performing various process tasks, calculations, and control functions used in the present methods and systems.

Further, methods described herein may be implemented by computer-executable instructions, such as program modules or components executed by the processor 203 or other computational devices. Generally, program modules include routines, programs, objects, data components, data structures, algorithms, and the like, which perform particular tasks or implement particular abstract data types.

In addition to the processor 203, the vehicle computer 201 also includes a memory 205. The memory 205 may be any suitable computer-readable storage media that includes, for example, non-volatile memory devices, including semiconductor memory devices such as random access memory (RAM), read-only memory (ROM), electrically erasable programmable ROM (EEPROM), or flash memory devices; magnetic disks such as internal hard disks or removable disks; optical storage devices such as compact discs (CDs), digital versatile discs (DVDs), Blu-ray discs, or other media that can carry or store desired program code as computer-executable instructions or data structures. Further, besides storing instructions for execution by the processor 203, the memory 205 may also store repositories for designated data groups. For example, the memory 205 includes memory dedicated for storing calculated measurements and databases of information that aid the processor 203 when processing the sensor data. In particular, the memory 205 may include a measurement repository 211, a terrain database 213, and/or particle models 223.

In some implementations, the system 200 may also include vision sensors 219 and/or position sensors 221. As used herein, vision sensors 219 include sensors that acquire information about the environment from captured images of the environment. The captured images may contain two-dimensional data or three-dimensional data. Using the two-dimensional data or three-dimensional data contained in the captured images, the processor 203 may identify the position and/or attitude of the vehicle using methods for identifying vehicle positions and attitudes from image data using methods known to one having skill in the art. Alternatively, the processor 203 may identify the type of surface reflecting the emitted optical signals. For example, the processor 203 may determine whether the reflecting surface is sand, tree cover, water, snow, rock, grasslands, or other type of surface type.

With respect to the position sensors 221, the position sensors 221 may provide position measurements or data that the processor 203 can use to identify the position and/or attitude of the vehicle. For example, the position sensors 221 may include global navigation satellite system (GNSS) receivers, inertial sensors, magnetometers, altimeters, barometers, and the like. In some implementations, the system 200 includes both position sensors 221 and the vision sensors 219, where the position sensors 221 are used to get the position of the vehicle and the vision sensors 219 are used to get the surface type that is reflecting the surface type.

In certain embodiments, the processor 203 may receive measurements from the DCS sensor 207 containing spectrographic measurements of an interrogated volume. The position sensors 221 and the vision sensors 219 may provide information about the position of the vehicle, and the vision sensors 219 may provide information that can be used to identify the reflecting surface type. In some implementations, the processor 203 may use information about the type of the reflecting surface to characterize the interaction of the reflecting surface with the emitted light. By characterizing the interaction of the surface with the emitted light, the processor 203 may isolate the information in the spectrographic information that is associated with the reflection of the emitted light by the reflecting surface from the information in the spectrographic information that is associated with the composition of the interrogated volume.

When the processor 203 has isolated the portion of the spectrographic information associated with the composition of the interrogated volume, the processor 203 may identify the composition of different gases by analyzing the isolated data in the spectrographic information received from the DCS sensor 207. For example, for a particular molecule or particle, the processor 203 may compare the spectrographic information against particle models stored in the particle models 223. The particle models 223 may store multiple models of different compositions of a particular particle or molecule. The processor 203 then compares the spectrographic information against the multiple models to identify the model closest to the spectrographic information. For example, the processor 203 may correlate the received information with the different stored models, and the model with the highest correlation may be used to identify the average composition of the interrogated volume for the modeled particle. The particle models 223 may store models for multiple particles and molecules, and the processor 203 may identify the average compositions of multiple particles and molecules for the interrogated volume. In alternative embodiments, the processor 203 may calculate the average compositions directly from the spectrographic information without using data stored in the particle models 223.

In alternative embodiments, the processor 203 may acquire information about the type of the reflecting surface from a terrain database 213. For example, the terrain database 213 may store information about the terrain types associated with particular geographic locations. As such, the processor 203 may identify a position based on information from the position sensors 221 and then identify the terrain type associated with the position stored in the terrain database 213. In some implementations, the processor 203 uses the information in the terrain database 213 in combination with the information received from the vision sensors 219 to characterize the terrain type.

When the processor 203 has calculated the measurements of the average composition of the interrogated volume, the processor 203 may provide the information to a control center 209 for further analysis. In some implementations, the processor 203 provides the measurements to the control center 209 through a communication interface 215. As used herein, the communication interface 215 is a communication link interface that allows the vehicle computer 201 to communicate through a communication link. For example, the communication interface 215 may interface with a SATCOM, VHF, 5G, IP, or other type of communication link. Additionally, the communication interface 215 may transmit the measurements to the control center 209 through a relay system 217. The relay system 217 then relays the received measurements to another relay system or directly to the control center 209. For example, an aircraft may relay the measurements through another aircraft using an ADS-B communication link to the control center 209. In some embodiments, where the communication link supports sufficient data rates, the vehicle computer 201 may transmit the spectrographic information to the control center 209, where the control center 209 then calculates the composition measurements for the interrogated volumes.

In additional embodiments, the processor 203 may store the spectrographic information, the calculated measurements, and/or the position associated with the acquired spectrographic information in the measurement repository 211. For example, potentially, where communication interfaces 215 cannot communicate with or relay measurements to the control center 209, the processor 203 may store data in the measurement repository 211. When the vehicle can establish a communication link with the control center 209 (for example, when landing or moving into a coverage area associated with a communication link), the processor 203 may transmit the stored measurements and data to the control center 209 either through the communication interfaces 215, through a direct connection to the control center 209, or through physically moving the measurement repository from the vehicle to the control center 209. With the data from the vehicle computer 201 and other similar vehicle computers, the control center 209 may provide higher-quality inputs to climate models. Also, the data may be used to improve the climate models.

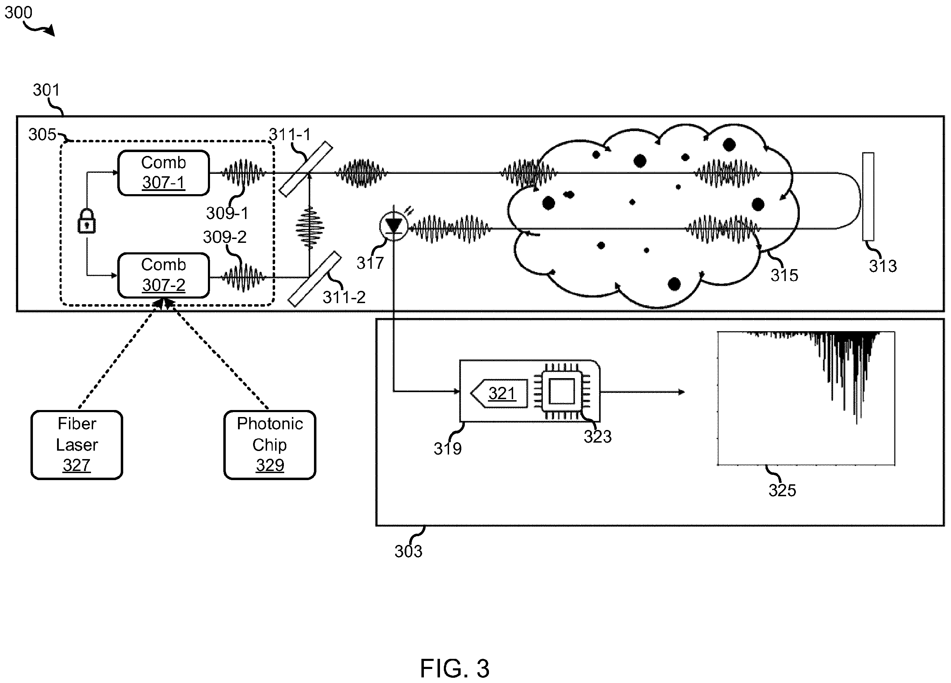

FIG. 3 is a diagram illustrating a dual-comb spectrometer sensor system 300 used in the systems described above. As illustrated, the system 300 includes two portions: an optical domain component 301 and an RF/Digital domain 303. As illustrated, the optical domain component 301 includes an optical signal source 305 that generates two optical frequency combs. Examples of potential optical signal sources include a fiber laser 327, a photonics chip 329, or other potential laser sources. To generate the two optical frequency combs, the optical signal source 305 may include a first comb source 307-1 that generates a first optical frequency comb 309-1 and a second comb source 307-2 that generates a second optical frequency comb 309-2. Optionally, the first optical frequency comb 309-1 and the second optical frequency comb 309-2 are phase-locked with each other. Each optical frequency comb includes spectral components in an optical spectrum. Each pair of adjacent spectral components, of each optical frequency comb, are separated by a constant frequency. However, such constant frequency separation differs between the first optical frequency comb 309-1 and the second optical frequency comb 309-2. The constant frequency separation for the first optical frequency comb 309-1 is a first separation frequency fₛ. The constant frequency separation for the second optical frequency comb 309-2 is a second separation frequency fₛ + Δf. Δf may be referred to as an offset frequency. Optionally, the first separation frequency fₛ is at least four orders of magnitude greater than the offset frequency Δf.

As illustrated, the first optical frequency comb 309-1 and the second optical frequency comb 309-2 are combined using optical components 311-1 and 311-2. The optical components 311-1 and 311-2 may include optical components that combine the first optical frequency comb 309-1 and the second optical frequency comb 309-2 and direct them towards the reflecting surface through the interrogated volume. For example, the optical components 311-1 and 311-2 may include mirrors, partially reflective mirrors, polarizers, wave plates, collimators, and the like. When the first optical frequency comb 309-1 and the second optical frequency comb 309-2 are combined, they are emitted from an aperture in the vehicle. When the first optical frequency comb 309-1 and the second optical frequency comb 309-2 are emitted from the aperture, they pass through a volume 315 between the vehicle and the reflecting surface and are incident on the surface 313. The reflecting surface 313 reflects the first optical frequency comb 309-1 and the second optical frequency comb 309-2 back towards the vehicle, where they pass through the aperture to be incident on a photodetector 317.

In certain embodiments, the photodetector 317 receives the reflected first optical frequency comb 309-1 and the second optical frequency comb 309-2 after each has propagated twice through the interrogated volume 315. The photodetector 317 generates an electrical signal representing a heterodyne beat frequency comb, *e.g.,* in a radio spectrum below the optical spectrum. The photodetector 317 then provides the electrical signal to the RF/Digital domain 303.

Within the RF/digital domain 303, the electrical signal is received by processing circuitry 319 that generates spectrographic information 325. The processing circuitry 319 may include an FPGA, a CPU, or other computational device. Additionally, the processing circuitry 319 may include additional circuitry that facilitates processing the signal received from the photodetector 317. For example, as the signal produced by the photodetector 317 may be an analog electrical signal, the processing circuitry 319 may include an analog-to-digital converter (ADC) 321 that converts the detected signal into the digital domain. Moreover, the processing circuitry 319 may include a processor 323 that generates spectrographic information 325 from the digital signal. The processor 323 may function similarly to the processor 203 in FIG. 2. Alternatively, the processing may be performed by the processor 203 in FIG. 2. When the spectrographic information 325 has been generated, a processor (such as processor 203) may perform additional processing to acquire the measurements of the particles and molecules contained within the interrogated volume 315, as described above.

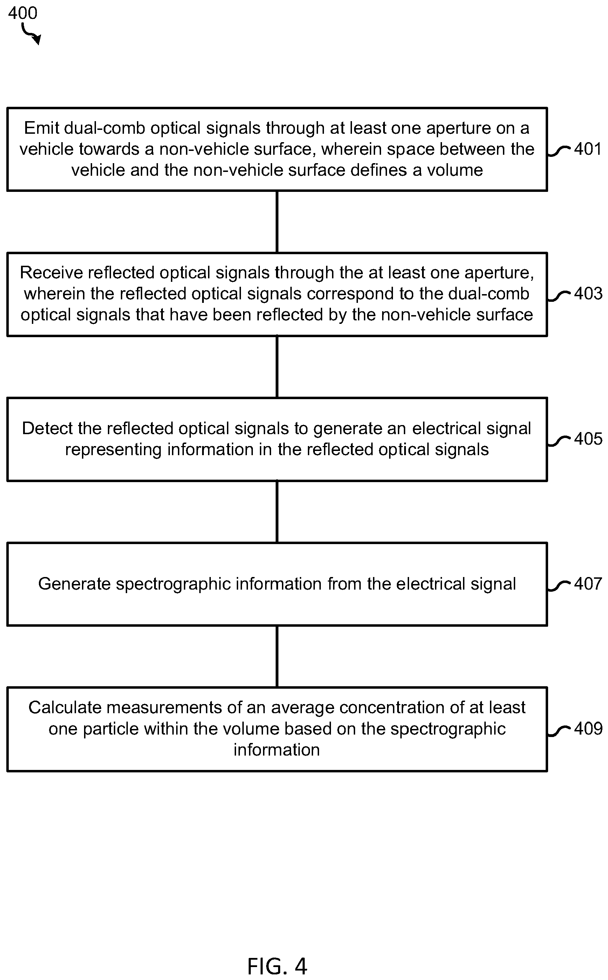

FIG. 4 is a flowchart diagram of a method 400 for providing vehicle-based dual-comb spectrometer measurements. According to the present invention, the method 400 proceeds at 401 where dual-comb optical signals are emitted through at least one aperture on a vehicle towards an external surface, wherein space between the vehicle and the external surface defines a volume. Also, the method 400 proceeds at 403, where reflected optical signals are received through the at least one aperture, wherein the reflected optical signals correspond to the dual-comb optical signals that have been reflected by the external surface. Additionally, the method 400 proceeds at 405, where the reflected optical signals are detected to generate an electrical signal representing information in the reflected optical signals.

According to the present invention, the method 400 proceeds at 407, where spectrographic information is generated from the electrical signal. Because the emitted signals are reflected by an external surface and the terrain of the external surface affects the spectrographic information in addition to the effects of particles in the volume of air between the vehicle and the external surface, the generation of spectrographic information includes characterizing the terrain type of the external surface and removing spectrographic information from the electrical signal associated with the characterized terrain type.

In some implementations, the terrain type may be characterized using position sensors that help identify the position and attitude of the vehicle in conjunction with a terrain database that associates terrain types with different locations on the external surface (like the surface of the earth). Accordingly, after identifying the position and attitude of the vehicle, processors (on the vehicle or control center) may use the position and attitude to identify the location on the external surface that is reflecting the emitted signal back to the vehicle. The processors may then identify the terrain type associated with the identified location on the external surface in a terrain database. When the terrain type is identified, the processors may remove spectrographic information from the electrical signals associated with the terrain type in relation to the position and attitude of the vehicle.

In alternative implementations, the terrain type may be characterized using image sensors located on the vehicle. In particular, the image sensors on the vehicle may emit one or more optical signals toward the external surface. The received optical signals may be detected, and the resultant electrical signals may be processed to identify the terrain type from the collected image data. For example, the image data may be matched to an image database, like satellite image databases, or the image data may be analyzed directly to identify the terrain type. When the terrain type is identified, the processors may remove spectrographic information from the electrical signals associated with the terrain type represented in the image data.

According to the present invention, the method 400 proceeds at 409, where measurements of an average concentration of at least one particle within the volume are calculated based on the spectrographic information. Additionally, when calculating the measurements, spectrographic information may be provided to a control center where at least one processor located at the control center calculates the measurements of the average concentration or at least one processor located on the vehicle performs the calculations. When information is provided to the control center, where the information is the spectrographic information or measurements calculated by on-vehicle processors, the information may be transmitted from the vehicle to the control center through one or more communication interfaces. In some implementations, when the vehicle is not in direct communication with the control center, the information may be relayed to the control center through transmissions from the vehicle to a relay system. The relay system may include other vehicles, relay stations, and the like. Alternatively, the information may be stored on a physical storage medium on the vehicle, where the physical storage medium may be provided to the control center when convenient.

In additional embodiments, calculating the measurements of the average concentration of at least one particle, at either the vehicle or control center, includes acquiring multiple particle models, where a particle model represents expected spectrographic information for particular concentrations of a particle. The processors may then compare the spectrographic information against the stored particle models to identify which of the particle models for a particle are most closely correlated with the spectrographic information. When the processor identifies the particle models with the highest correlation, the processor may determine that the average concentration of the most highly correlated particle model is the approximate average concentration of that particle within the interrogated environmental volume.

Although specific embodiments have been illustrated and described herein, it will be appreciated by those of ordinary skill in the art that it is manifestly intended that this invention be limited only by the claims.

## Claims

1. A system comprising:
a vehicle having a body with at least one aperture formed therein and a vehicle surface;
a dual-comb spectrometer (207) mounted to the body, wherein the dual-comb spectrometer (207) is configured to emit dual-comb optical signals through the at least one aperture towards an external surface (313), wherein the external surface (313) is a surface not part of the vehicle surface, wherein the dual-comb spectrometer (207) is configured to receive reflected optical signals through the at least one aperture, wherein the reflected optical signals correspond to the dual-comb optical signals that have been reflected by the external surface (313);
a detector configured to detect the reflected optical signals and generate an electrical signal representing information in the reflected optical signals; and
one or more processors (203) configured to produce measurements of an average concentration of at least one particle within a volume (315) between the vehicle and the external surface (313) based on spectrographic information (325) from the reflected optical signals,
**characterized in that**
the spectrographic information (325) is generated by characterizing the terrain type of the external surface and removing spectrographic information (325) from the electrical signal associated with the characterized terrain type.

2. The system of claim 1, further comprising one or more communication interfaces (215), wherein the one or more communication interfaces are configured to transmit data to a control center, and wherein the data transmitted through the one or more communication interfaces (215) comprises at least one of the spectrographic information (325) and the measurements of the average concentration.

3. The system of claim 2, wherein the spectrographic information (325) is configured to be transmitted to the control center (209) and the one or more processors is located at the control center (209) and is configured to produce the measurements from the spectrographic information (325) transmitted through the one or more communication interfaces (215).

4. The system of any of claims 1 to 3, further comprising:
one or more position sensors (221) configured to determine position and attitude of the vehicle; and
a memory (205) configured to store a terrain database (213);
wherein at least one processor in the one or more processors (203) is configured to identify a terrain type associated with the external surface (313) based on terrain information stored in the terrain database (213) that is associated with the position and the attitude of the vehicle;
wherein the at least one processor (203) adjust the spectrographic information (325) based on the terrain type.

5. The system of any of claims 1 to 4, further comprising:
a memory (205) configured to store one or more particle models (223);
wherein at least one processor in the one or more processors (203) is configured to identify the average concentration of the at least one particle by correlating the spectrographic information (325) with the one or more particle models (223).

6. The system of any of claims 1 to 5, further comprising:
one or more vision sensors (219) configured to provide image information of the external surface (313);
wherein at least one processor in the one or more processors (203) is configured to identify a terrain type for the external surface (313); and
wherein the at least one processor adjusts the spectrographic information (325) based on the terrain type.

7. A method, comprising:
emitting dual-comb optical signals through at least one aperture on a vehicle towards an external surface (313), wherein space between the vehicle and the external surface (313) defines a volume (315), wherein the external surface (313) is a surface not part of a surface of the vehicle;
receiving reflected optical signals through the at least one aperture, wherein the reflected optical signals correspond to the dual-comb optical signals that have been reflected by the external surface (313);
detecting the reflected optical signals to generate an electrical signal representing information in the reflected optical signals;
generating spectrographic information (325) from the electrical signal, wherein generating spectrographic information (325) includes characterizing the terrain type of the external surface and removing spectrographic information (325) from the electrical signal associated with the characterized terrain type; and
calculating measurements of an average concentration of at least one particle within the volume based on the spectrographic information (325).

8. The method of claim 7, wherein generating the spectrographic information (325) further comprises:
identifying position and attitude of the vehicle using one or more position sensors (221) located on the vehicle;
identifying a terrain type in a terrain database (213) associated with the position and the attitude of the vehicle in relation to the external surface (313); and
removing terrain spectrographic information associated with the terrain type from the spectrographic information (325).

9. The method of claim 7 or 8, wherein generating the spectrographic information (325) further comprises:
acquiring image information of the external surface (313) through one or more vision sensors (219) located on the vehicle;
identifying a terrain type based on the image information; and
removing terrain spectrographic information associated with the terrain type from the spectrographic information (325).

10. The method of any of claims 7 to 9, wherein calculating the measurements of the average concentration of the at least one particle comprises:
acquiring a plurality of particle models (223), wherein a particle model represents expected spectrographic information for particular concentrations of a particle;
correlating the spectrographic information (325) with the plurality of particle models (223); and
calculating the measurements of the average concentration based on correlations of the spectrographic information (325) with the plurality of particle models (223).

## Patentansprüche

1. System, umfassend:
ein Fahrzeug, das einen Körper mit mindestens einer darin ausgebildeten Öffnung und eine Fahrzeugfläche aufweist;
ein Doppelkammspektrometer (207), das an den Körper montiert ist, wobei das Doppelkammspektrometer (207) dazu konfiguriert ist, optische Doppelkammsignale durch die mindestens eine Öffnung zu einer externen Fläche (313) hin zu emittieren, wobei die externe Fläche (313) eine Fläche ist, die nicht Teil der Fahrzeugfläche ist, wobei das Doppelkammspektrometer (207) dazu konfiguriert ist, reflektierte optische Signale durch die mindestens eine Öffnung zu empfangen, wobei die reflektierten optischen Signale optischen Doppelkammsignalen entsprechen, die von der externen Fläche (313) reflektiert wurden;
einen Detektor, der dazu konfiguriert ist, die reflektierten optischen Signale zu detektieren und ein elektrisches Signal zu erzeugen, das Informationen in den reflektierten optischen Signalen darstellt; und
einen oder mehrere Prozessoren (203), die dazu konfiguriert sind, Messungen einer Durchschnittskonzentration von mindestens einem Partikel innerhalb eines Volumens (315) zwischen dem Fahrzeug und der externen Fläche (313) auf Basis von spektrographischen Informationen (325) aus den reflektierten optischen Signalen hervorzubringen,
**gekennzeichnet dadurch, dass** die spektrographischen Informationen (325) erzeugt werden durch Kennzeichnen des Geländetyps der externen Fläche und Entfernen von spektrographischen Informationen (325) aus dem elektrischen Signal, die dem gekennzeichneten Geländetyp zugehörig sind.

2. System nach Anspruch 1, ferner umfassend eine oder mehrere Kommunikationsschnittstellen (215), wobei die eine oder die mehreren Kommunikationsschnittstellen dazu konfiguriert sind, Daten an ein Steuerzentrum zu übertragen, und wobei die durch die eine oder die mehreren Kommunikationsschnittstellen (215) übertragenen Daten mindestens eines von den spektrographischen Informationen (325) und den Messungen der Durchschnittskonzentration umfassen.

3. System nach Anspruch 2, wobei die spektrographischen Informationen (325) dazu konfiguriert sind, an das Steuerzentrum (209) übertragen zu werden und der eine oder die mehreren Prozessoren an dem Steuerzentrum (209) angeordnet sind und dazu konfiguriert sind, die Messungen aus den durch die eine oder die mehreren Kommunikationsschnittstellen (215) übertragenen spektrographischen Informationen (325) hervorzubringen.

4. System nach einem der Ansprüche 1 bis 3, ferner umfassend:
einen oder mehrere Positionssensoren (221), die dazu konfiguriert sind, eine Position und eine Lage des Fahrzeugs zu bestimmen; und
einen Speicher (205), der dazu konfiguriert ist, eine Geländedatenbank (213) zu speichern;
wobei mindestens ein Prozessor aus dem einen oder den mehreren Prozessoren (203) dazu konfiguriert ist, auf Basis von in der Geländedatenbank (213) gespeicherten Informationen, die der Position und der Lage des Fahrzeugs zugehörig sind, einen Geländetyp, der der externen Fläche (313) zugehörig ist, zu identifizieren;
wobei der mindestens eine Prozessor (203) die spektrographischen Informationen (325) auf Basis des Geländetyps anpasst.

5. System nach einem der Ansprüche 1 bis 4, ferner umfassend:
einen Speicher (205), der dazu konfiguriert ist, ein oder mehrere Partikelmodelle (223) zu speichern;
wobei der mindestens eine Prozessor aus dem einen oder den mehreren Prozessoren (203) dazu konfiguriert ist, die Durchschnittskonzentration des mindestens einen Partikels durch Korrelieren der spektrographischen Informationen (325) mit dem einen oder den mehreren Partikelmodellen (223) zu identifizieren.

6. System nach einem der Ansprüche 1 bis 5, ferner umfassend:
einen oder mehrere Sichtsensoren (219), die dazu konfiguriert sind, Bildinformationen der externen Fläche (313) bereitzustellen;
wobei mindestens ein Prozessor aus dem einen oder den mehreren Prozessoren (203) dazu konfiguriert ist, einen Geländetyp für die externe Fläche (313) zu identifizieren; und
wobei der mindestens eine Prozessor die spektrographischen Informationen (325) auf Basis des Geländetyps anpasst.

7. Verfahren, umfassend:
Emittieren von optischen Doppelkammsignalen durch mindestens eine Öffnung an einem Fahrzeug zu einer externen Fläche (313) hin, wobei ein Raum zwischen dem Fahrzeug und der externen Fläche (313) ein Volumen (315) definiert, wobei die externe Fläche (313) eine Fläche ist, die nicht Teil einer Fläche des Fahrzeugs ist;
Empfangen von reflektierten optischen Signalen durch die mindestens eine Öffnung, wobei die reflektierten optischen Signale den optischen Doppelkammsignalen entsprechen, die von der externen Fläche (313) reflektiert wurden;
Detektieren der reflektierten optischen Signale, um ein elektrisches Signal zu erzeugen, das Informationen in den reflektierten optischen Signalen darstellt;
Erzeugen von spektrographischen Informationen (325) aus dem elektrischen Signal, wobei das Erzeugen von spektrographischen Informationen (325) das Kennzeichnen des Geländetyps der externen Fläche und das Entfernen von spektrographischen Informationen (325) aus dem elektrischen Signal, die dem gekennzeichneten Geländetyp zugehörig sind, beinhaltet; und
Berechnen von Messungen einer Durchschnittskonzentration von mindestens einem Partikel innerhalb des Volumens auf Basis der spektrographischen Informationen (325).

8. Verfahren nach Anspruch 7, wobei das Erzeugen der spektrographischen Informationen (325) ferner Folgendes umfasst:
Identifizieren von Position und Lage des Fahrzeugs unter Verwendung von einem oder mehreren Positionssensoren (221), die an dem Fahrzeug angeordnet sind;
Identifizieren eines Geländetyps in einer Geländedatenbank (213), der der Position und der Lage des Fahrzeugs im Verhältnis zu der externen Fläche (313) zugehörig ist; und
Entfernen von spektrographischen Geländeinformationen, die dem Geländetyp zugehörig sind, aus den spektrographischen Informationen (325).

9. Verfahren nach Anspruch 7 oder 8, wobei das Erzeugen der spektrographischen Informationen (325) ferner Folgendes umfasst:
Erfassen von Bildinformationen der externen Fläche (313) durch einen oder mehrere Sichtsensoren (219), die an dem Fahrzeug angeordnet sind;
Identifizieren eines Geländetyps auf Basis der Bildinformationen; und
Entfernen von spektrographischen Geländeinformationen, die dem Geländetyp zugehörig sind, aus den spektrographischen Informationen (325).

10. Verfahren nach einem der Ansprüche 7 bis 9, wobei das Berechnen der Messungen der Durchschnittskonzentration des mindestens einen Partikels Folgendes umfasst:
Erfassen einer Vielzahl von Partikelmodellen (223), wobei ein Partikelmodell erwartete spektrographische Informationen für bestimmte Konzentrationen eines Partikels darstellt;
Korrelieren der spektrographischen Informationen (325) mit der Vielzahl von Partikelmodellen (223); und
Berechnen der Messungen der Durchschnittskonzentration auf Basis von Korrelationen der spektrographischen Informationen (325) mit der Vielzahl von Partikelmodellen (223).

## Revendications

1. Système comprenant :
un véhicule présentant un corps avec au moins une ouverture formée dans celui-ci et une surface de véhicule ;
un spectromètre à double peigne (207) monté sur le corps, dans lequel le spectromètre à double peigne (207) est configuré pour émettre des signaux optiques à double peigne à travers l'au moins une ouverture vers une surface externe (313), dans lequel la surface externe (313) est une surface ne faisant pas partie de la surface de véhicule, dans lequel le spectromètre à double peigne (207) est configuré pour recevoir des signaux optiques reflétés à travers l'au moins une ouverture, dans lequel les signaux optiques reflétés correspondent aux signaux optiques à double peigne qui ont été reflétés par la surface externe (313) ;
un détecteur configuré pour détecter les signaux optiques reflétés et générer un signal électrique représentant des informations dans les signaux optiques reflétés ; et
un ou plusieurs processeurs (203) configurés pour produire des mesures d'une concentration moyenne d'au moins une particule dans un volume (315) entre le véhicule et la surface externe (313) sur la base d'informations spectrographiques (325) des signaux optiques reflétés,
**caractérisé en ce que** les informations spectrographiques (325) sont générées en caractérisant le type de terrain de la surface externe et en retirant des informations spectrographiques (325) du signal électrique associé au type de terrain caractérisé.

2. Système selon la revendication 1, comprenant en outre une ou plusieurs interfaces de communication (215), dans lequel la ou les interfaces de communication sont configurées pour transmettre des données à un centre de contrôle, et dans lequel les données transmises à travers la ou les interfaces de communication (215) comprennent au moins l'une des informations spectrographiques (325) et les mesures de la concentration moyenne.

3. Système selon la revendication 2, dans lequel les informations spectrographiques (325) sont configurées pour être transmises au centre de contrôle (209) et le ou les processeurs sont situés au niveau du centre de contrôle (209) et sont configurés pour produire les mesures à partir des informations spectrographiques (325) transmises à travers la ou les interfaces de communication (215).

4. Système selon l'une quelconque des revendications 1 à 3, comprenant en outre :
un ou plusieurs capteurs de position (221) configurés pour déterminer une position et une attitude du véhicule ; et
une mémoire (205) configurée pour stocker une base de données de terrain (213) ;
dans lequel au moins un processeur dans le ou les processeurs (203) est configuré pour identifier un type de terrain associé à la surface externe (313) sur la base des informations de terrain stockées dans la base de données de terrain (213) qui sont associées à la position et à l'attitude du véhicule ;
dans lequel l'au moins un processeur (203) ajuste les informations spectrographiques (325) sur la base du type de terrain.

5. Système selon l'une quelconque des revendications 1 à 4, comprenant en outre :
une mémoire (205) configurée pour stocker un ou plusieurs modèles de particules (223) ;
dans lequel au moins un processeur dans le ou les processeurs (203) est configuré pour identifier la concentration moyenne de l'au moins une particule par corrélation des informations spectrographiques (325) avec le ou les modèles de particules (223).

6. Système selon l'une quelconque des revendications 1 à 5, comprenant en outre :
un ou plusieurs capteurs de vision (219) configurés pour fournir des informations d'image de la surface externe (313) ;
dans lequel au moins un processeur dans le ou les processeurs (203) est configuré pour identifier un type de terrain pour la surface externe (313) ; et
dans lequel l'au moins un processeur ajuste les informations spectrographiques (325) sur la base du type de terrain.

7. Procédé, comprenant :
l'émission de signaux optiques à double peigne à travers au moins une ouverture sur un véhicule vers une surface externe (313), dans laquelle un espace entre le véhicule et la surface externe (313) définit un volume (315), dans laquelle la surface externe (313) est une surface ne faisant pas partie d'une surface du véhicule ;
la réception de signaux optiques reflétés à travers l'au moins une ouverture, dans laquelle les signaux optiques reflétés correspondent aux signaux optiques à double peigne qui ont été reflétés par la surface externe (313) ;
la détection des signaux optiques reflétés pour générer un signal électrique représentant des informations dans les signaux optiques reflétés ;
la génération d'informations spectrographiques (325) du signal électrique, dans laquelle la génération d'informations spectrographiques (325) inclut la caractérisation du type de terrain de la surface externe et le retrait d'informations spectrographiques (325) du signal électrique associé au type de terrain caractérisé ; et
le calcul de mesures d'une concentration moyenne d'au moins une particule dans le volume sur la base des informations spectrographiques (325).

8. Procédé selon la revendication 7, dans lequel la génération des informations spectrographiques (325) comprend en outre :
l'identification d'une position et d'une attitude du véhicule en utilisant un ou plusieurs capteurs de position (221) situés sur le véhicule ;
l'identification d'un type de terrain dans une base de données de terrain (213) associé à la position et à l'attitude du véhicule par rapport à la surface externe (313) ; et
le retrait d'informations spectrographiques de terrain associées au type de terrain des informations spectrographiques (325).

9. Procédé selon la revendication 7 ou 8, dans lequel la génération des informations spectrographiques (325) comprend en outre :
l'acquisition d'informations d'image de la surface externe (313) à travers un ou plusieurs capteurs de vision (219) situés sur le véhicule ;
l'identification d'un type de terrain sur la base des informations d'image ; et
le retrait d'informations spectrographiques de terrain associées au type de terrain des informations spectrographiques (325).

10. Procédé selon l'une quelconque des revendications 7 à 9, dans lequel le calcul des mesures de la concentration moyenne de l'au moins une particule comprend :
l'acquisition d'une pluralité de modèles de particules (223), dans laquelle un modèle de particules représente des informations spectrographiques attendues pour des concentrations particulières d'une particule ;
la corrélation des informations spectrographiques (325) avec la pluralité de modèles de particules (223) ; et
le calcul des mesures de la concentration moyenne sur la base de corrélations des informations spectrographiques (325) avec la pluralité de modèles de particules (223).
